## Europäisches Patentamt

## European Patent Office

## Office européen des brevets

(11) Veröffentlichungsnummer: **0 036 493**
A2

# EUROPÄISCHE PATENTANMELDUNG

(21) Anmeldenummer: **81101293.9**

(22) Anmeldetag: **23.02.81**

(51) Int. Cl.³: **C 08 F 263/02,** C 08 F 255/02
// (C08F263/02, 212/04, 220/42),(C08F255/02, 212/04, 220/42)

(30) Priorität: **07.03.80 DE 3008746**

(43) Veröffentlichungstag der Anmeldung: **30.09.81**
**Patentblatt 81/39**

(84) Benannte Vertragsstaaten: **DE FR GB IT**

(71) Anmelder: **BAYER AG, Zentralbereich Patente, Marken und Lizenzen, D-5090 Leverkusen 1, Bayerwerk (DE)**

(72) Erfinder: **Steffen, Ulrich, Dr., Im Daubenthal 8, D-4047 Dormagen (DE)**
Erfinder: **Alberts, Heinrich, Dr., Morgengraben 16, D-5000 Köln 80 (DE)**
Erfinder: **Morbitzer, Leo, Dr., Rungestrasse 50, D-5000 Köln 80 (DE)**

(54) Verfahren zur Herstellung von Pfropfcopolymerisaten.

(57) Verfahren zur Herstellung von Pfropfcopolymerisaten durch radikalisch initiierte Fällungscopolymerisation eines Ethylen-Vinylester-Copolymeren als Pfropfsubstrat und eines aufzupfropfenden Gemisches von einem oder mehreren Monovinylaromaten, Acrylnitril und/oder Methacrylnitril und einem weiteren monoolefinisch ungesättigten copolymerisierbaren Monomeren, wobei gleichzeitig mit dem ausfallenden Pfropfcopolymerisat das nicht gepfropfte Substrat durch Zugabe eines Fällungsmittels ausgefällt wird.

0036493

BAYER AKTIENGESELLSCHAFT     5090 Leverkusen-Bayerwerk
Zentralbereich
Patente Marken und Lizenzen    Kb/ABc


Verfahren zur Herstellung von Pfropfcopolymerisaten

Die vorliegende Erfindung betrifft ein Verfahren zur Herstellung von Pfropfcopolymerisaten aus Ethylen-Vinylester-Copolymeren, Monovinylaromaten und (Meth)-Acrylnitril durch Fällungspolymerisation, wobei während der Pfropfpolymerisation nicht nur das gebildete Pfropfcopolymerisat sondern auch, durch Zugabe eines Fällungsmittels, das gelöste, nicht umgesetzte Pfropfsubstrat ausgefällt wird.

Gegenüber der Polymerisation in Masse hat die Fällungscopolymerisation in organischen Medien einige verfahrenstechnische Vorteile wie niedrige Viskosität und gute Wärmeabfuhr,gegenüber der Emulsions- oder Suspensionspolymerisation den Vorteil der geringeren Abwasserbelastung, da keine Emulgatoren benötigt werden und eingesetzte hochmolekulare Dispergatoren zum größten Teil im Polymerisat verbleiben.

Bei der Pfropfung durch Fällungspolymerisation wird das Pfropfsubstrat in einem Lösungsmittel gelöst, welches für das sich bildende Pfropfcopolymerisat ein Fällungsmittel darstellt. Aus den DE-OS 22 15 588,

Le A 19 468

25 09 403 und 26 56 228 ist es beispielsweise bekannt, die Pfropfung von Styrol oder Styrol-Acrylnitril-Gemischen auf Ethylen-Vinylester-Copolymere mit einem Vinylestergehalt zwischen 30 und 80 Gew.-% in tert. Butanol als Lösungs-Fällungsmittel durchzuführen.

Das sich bildende Styrol-Acrylnitril-Copolymerisat und das Ethylen-Vinylester-Styrol-Acrylnitril-Pfropfcopolymerisat fallen als feinteilige Dispersion an mit Partikelgrößen zwischen 0,1 und 2 µm. Die ungepfropften Anteile des Ethylen-Vinylester-Copolymerisats verbleiben jedoch in Lösung und führen bei einem Feststoffgehalt $>$ 30 Gew.-% zu einer hohen Viskosität und schlechten Durchmischung des Polymerisationssatzes. Wird diese Dipersion durch Fällung in heißem Wasser und Strippen mit Dampf aufgearbeitet, dann erhält man infolge der gelösten Pfropfsubstratanteile ein grobteiliges Produkt. Dies ist für die Trocknung und nachträgliche Verarbeitung wie Abmischen und Granulieren von Nachteil. Diese Dispersionen führen auch bei der Schneckenausdampfung zur Schaumbildung und zu Ablagerungen in den Ausdampfgehäusen.

Es wurde nun gefunden, daß die vorerwähnten Nachteile der herkömmlichen Fällungspolymerisation überwunden werden, wenn während der Pfropfcopolymerisation das gelöste Pfropfsubstrat durch Zugabe eines Fällungsmittels ebenfalls ausgefällt wird.

Le A 19 468

Gegenstand der Erfindung ist ein Verfahren zur Herstellung von Pfropfcopolymerisaten durch radikalische initiierte Fällungscopolymerisation von

A) 10-80 Gew.-% eines Ethylen-Vinylester-Copolymeren als Pfropfsubstrat und

B) 90-20 Gew.-% eines aufzupfropfenden Gemisches von

I) 95-35, vorzugsweise 95, 9-58 Gew.-.% eines oder mehrerer MOnovinylaromaten,

II) 5-50, vorzugsweise 5-30 Gew.-% Acrylnitril und/oder Methacrylnitril und

III) 0-15, vorzugsweise 0,1-12 Gew.-% eines weiteren monoolefinisch ungesättigten copolymerisierbaren Monomeren, wobei die Summe von A und B und I-III 100 Gew.-% beträgt, dadurch gekennzeichnet, daß gleichzeitig mit dem ausfallenden Pfropfcopolymerisat das nichtgepfropfte Substrat durch Zugabe eines Fällungsmittels ausgefällt wird.

Zur Durchführung des erfindungsgemäßen Verfahrens wird das Ethylen-Vinylester-Copolymerisat gelöst. Als Lösungsmittel eignen sich verzweigte und geradkettige $C_4$-$C_8$-Monoalkohole sowie cycloaliphatische und aromatische, gegebenenfalls halogenierte Kohlenwasserstoffe. Bevorzugt wird tert.-Butanol eingesetzt.

Durch Zugabe der Monomeren und eines radikalischen Initiators wird die Pfropfcopolymerisation gestartet. Zur gleichen Zeit wird langsam ein Fällungsmittel für das Ethylen-Vinylester-Copolymere zugegeben. Dazu eignen sich Wasser und $C_1$-$C_3$-Alkohole; vorzugsweise wird Wasser eingesetzt. Während und nach dem Fällvorgang wird die Zugabe der Monomeren und des Initiators fortgeführt und nach beendeter Zugabe bis zum völligen Verbrauch des Initiators auspolymerisiert.

Der Feststoffgehalt der entstehenden, gut fließenden Dispersion kann dabei 40-45 Gew.-% erreichen. Die Durchmesser der dispergierten Partikel betragen 10-50 µm.

Die Aufarbeitung der Dispersion und Abtrennung der Polymerisate kann nach üblichen Verfahren erfolgen: Das Strippen mit Wasserdampf liefert feinpulvrige Pfropfcopolymerisate mit niedrigen Restmonomer- und Lösungsmittelgehalten. Nach der Trocknung haben die Partikel eine Größe bis 1 mm Durchmesser. Eine Schneckenausdampfung führt zu weißem, glänzendem Granulat mit ebenfalls niedrigem Restmonomergehalt. Eine Schaumbildung tritt nicht mehr auf, so daß die Ausdampfung über einen längeren Zeitraum störungsfrei betrieben werden kann.

Als Pfropfsubstrate werden Ethylen-Vinylester-Copolymere mit 25 bis 75 Gewichtsprozent, vorzugsweise 35-50 Gewichtsprozent einpolymerisierten Vinylestern eingesetzt. Geeignet sind Vinylester von $C_1$-$C_{18}$-Monocarbonsäuren,

Le A 19 468

vorzugsweise Vinylacetat. Die Ethylen-Vinylester-Copolymeren haben i.a. Mooneyviskositäten ML 4/100°C,
gemessen nach DIN 53 523, von 15-80, bevorzugt von 20-
45 und Grenzviskositäten $\eta$ von 0,5 bis 1,8 $\overline{dl/g}$
gemessen in THF. Diese Copolymeren sind in Kohlenwasserstoffen und in $C_4$-$C_8$ Alkoholen, bevorzugt in
tert.-Butanol löslich.

Als aufzupfropfende Monomere werden (Meth-)Acrylnitril,
Styrol, $\alpha$-Methyl-Styrol und kernsubstituierte Styrole
wie Halogen- und Alkylstyrole mit 1 bis 4 C-Atomen im
Alkylrest eingesetzt. Bevorzugt sind Styrol und Acrylnitril.

Gegebenenfalls können weitere monoolefinische ungesättigte, copolymerisierbare, pfropfaktive Monomere wie
Vinylchlorid, (Meth-)Acrylsäure, (Meth-)Acrylsäureester mit 1 bis 12 C-Atomen im Alkylrest, (Meth-)Acrylamid, $\alpha$-Olefine mit 2 bis 18 C-Atomen und Allylverbindungen wie Diallylcarbonat, 1-Buten-3,4-diol,
2-Methylen-1,3-dihydroxypropan und 2-Methylen-1,3-
diacetoxypropan eingesetzt werden. Diese Monomeren werden
auch als Pfropfaktivatoren bezeichnet.

Die Pfropfcopolymerisation kann durch Bestrahlung oder
radikalliefernde Initiatoren ausgelöst werden. Als
Polymerisationsinitiatoren eignen sich Azoverbindungen
wie Azobisisobuttersäurenitril und insbesondere organische Perverbindungen wie Isopropylperoxydicarbonat,
$\alpha$-Ethylhexylperoxydicarbonat, Cyclohexylperoxydicarbonat, tert.-Butylperpivalat, tert.-Butylperoctoat, tert.-

Butyl-perneodekanoat, Diacetylperoxid, Lauroylperoxid, Succinylperoxid und Dibenzoylperoxid.

Die Initiatorkonzentration kann 0,1 bis 1,0 Gew.-%, bevorzugt 0,3 bis 0,5 Gew.-% betragen, bezogen auf das eingesetzte Monomerengemisch. Die Pfropfpolymerisation kann je nach verwendeten Initiatoren bei Temperaturen zwischen 40°C und 250°C, bevorzugt zwischen 60° und 120°C durchgeführt werden.

Die Pfropfcopolymerisation nach dem erfindungsgemäßen Verfahren kann im allgemeinen ohne Verwendung von Dispergatoren durchgeführt werden, da die Ethylen-Vinylestercopolymeren selbst als Dispergatoren wirken. Der zusätzliche Einsatz eines weiteren Dispergators bewirkt eine Verkleinerung der Partikelgrößen und nach Beendigung der Pfropfsubstratfällung eine Erhöhung der Polymerisationsgeschwindigkeit und des Monomerenumsatzes.

Als Dispergatoren seien Polyvinylalkohol, teilverseiftes Polyvinylacetat, Cellulosederivate wie Methyl- oder ß-Hydroxyethyl-Cellulose, Styrol-Acrylsäure- oder verseifte Styrol-Maleinsäureanhydrid-Copolymerisate, Methacrylsäure-Methylmethacrylat-Copolymere, Polyethylenoxid, Polyacrylamid oder Polyacrylsäure beispielhaft erwähnt.

Die Menge der eingesetzten Dispergatoren beträgt 0,01-3 Gew.-%, bevorzugt 0,1-1,0 Gew.-%, bezogen auf die eingesetzte flüssige Phase.

Le A 19 468

0036493

Die nach dem erfindungsgemäßen Verfahren hergestellten Pfropfcopolymerisate sind in Toluol oder THF vollkommen löslich. Sie haben Grenzviskositätswerte $\eta$ von 0,4-4,0, bevorzugt von 0,6-2,0 $/\overline{d}l/\overline{g}/$, gemessen in THF bei 25°C.

In diesen Produkten ist das Substrat weitgehend gepfropft. Aus den Produkten können durch erschöpfende Extraktion mit tert.-Butanol bei 80°C lediglich 25-35 % des eingesetzten Ethylen-Vinylester-Copolymerisates extrahiert werden. Dabei handelt es sich vornehmlich um niedermolekulare Anteile. Aus Produkten, die nach herkömmlichen Verfahren ohne gleichzeitige Ausfällung des Substrats hergestellt werden, können dagegen 50-60 % an nicht umgesetztem Pfropfsubstrat extrahiert werden.

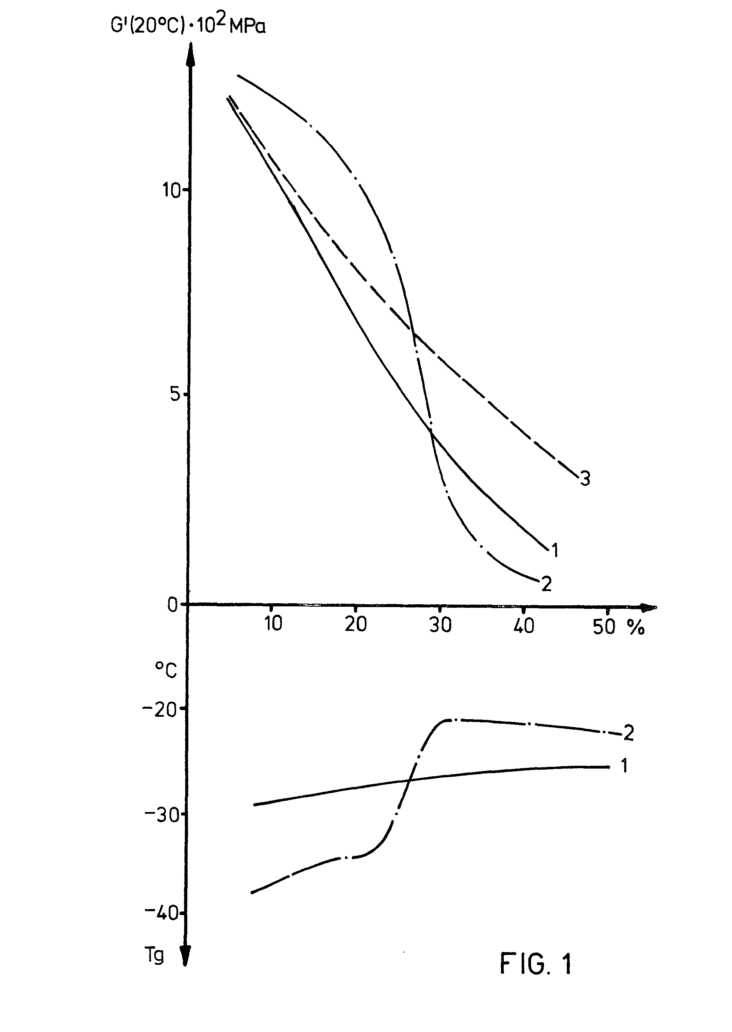

Die Fällung der Pfropfgrundlage nach dem erfindungsgemäßen Verfahren wirkt sich auch auf die polymerphysikalischen Eigenschaften der Pfropfcopolymerisate aus. So unterscheidet sich der Verlauf der Modulwerte G' bei 20°C und der Glastemperatur Tg des Kautschuks (Substrat) in Abhängigkeit vom Kautschukgehalt deutlich von dem, der an Pfropfcopolymerisaten ohne Fällung des Substrats gemessen wurde (Abb. 1). Die Phasenumkehr bei Kautschukgehalten zwischen 20 und 30 Gew.-%, die mitunter Schwierigkeiten bei der Spritzgußverarbeitung bereitete, tritt bei den Pfropfcopolymerisaten nach dem erfindungsgemäßen Verfahren nicht mehr auf. Der Modulverlauf ist mit dem von ABS-Pfropfcopolymerisaten vergleichbar.

Le A 19 468

Abb. 1 zeigt den Verlauf des Schubmoduls G' bei 20°C und der Glastemperatur Tg des Kautschuks in Abhängigkeit vom Kautschukgehalt in Ethylen-Vinyl-acetat-Styrol-Acrylnitril-Propfcopolymerisaten.

Kurve 1: Pfropfcopolymerisate nach dem erfindungsgemäßen Verfahren.

Kurve 2: Pfropfcopolymerisate, hergestellt ohne gleichzeitige Fällung des Pfropfsubstrates.

Kurve 3: ABS-Pfropfcopolymerisate

Die Messungen wurden mit einem "Lonza-Torsionsautomaten" durchgeführt.

Die nach dem erfindungsgemäßen Verfahren hergestellte Pfropfcopolymerisate mit Pfropfsubstratgehalten von 18 bis 25 Gew.-% können als bewitterungsstabile, schlagzähe Thermoplasten verwendet werden. Sie lassen sich in Knetern oder Extrudern im Temperaturbereich zwischen 200 und 280°C problemlos verarbeiten. Extrudierte und spritzgegossene Formstücke zeigen einen hohen Oberflächenglanz.

Pfropfcopolymerisate mit Pfropfsubstratgehalten zwischen 30 und 60 Gew.-%, bevorzugt zwischen 45-55 Gew.-%, eignen sich als Elastifikatoren für Harze mit geringer Zähigkeit.

Die folgenden Beispiele erläutern die Erfindung. Prozentangaben sind stets Gew.-%.

Le A 19 468

Beispiel 1

In einem 6 l-Kolben werden 330 g Ethylen-Vinylacetat-Copolymer (EVA) mit 45 Gew.-% einpolymerisiertem Vinyl-acetat und einer Mooney-Viskosität von 20 in 1400 g tert.-Butanol und 150 g Wasser bei 75°C gelöst. Von einer Monomermischung bestehend aus 365 g Styrol und 135 g Acrylnitril werden 30 % zur Pfropfsubstratlösung gegeben. Der Rest wird in 1,5 Stunden zugetropft. Gleichzeitig werden eine Lösung bestehend aus 4 g tert.-Butylperpivalat, 500 g tert-Butanol und 55 g Wasser sowie 500 g Wasser getrennt voneinander in 1,5 h eingetropft.

Anschließend wird 2 h bei 75°C bis zum völligen Verbrauch des Initiators und einem Feststoffgehalt von 23 % auspolymerisiert. Nach Ausfällung mit Ethanol und Trocknung bei 60°C wird ein feinpulvriges Pfropfcopolymerisat mit einem EVA-Gehalt von 45 Gew.-% erhalten. Die Grenz-viskosität $\eta_{\iota}$ in THF bei 25°C beträgt 2,10 $\underline{/}$dl/q$\underline{/}$.

Beispiel 2

Es wird wie in Beispiel 1 verfahren mit dem Unterschied, daß als zusätzliches pfropfaktives Monomer 25 g Methylacrylat eingesetzt werden. Es wird ebenfalls ein feinpulvriges Pfropfcopolymerisat mit einem EVA-Gehalt von 54,6 Gew.-% und einer Grenzviskosität $\eta_{\iota}$ in THF bei 25°C von 1,70 $\underline{/}$dl/q$\underline{/}$ erhalten.

Le A 19 468

Beispiel 3

In einem 130 l-Autoklaven werden 5,8 kg EVA des Beispiels 1 in 30 kg t-Butanol und 3,3 kg Wasser bei 80°C gelöst. Anschließend werden 30 % einer Monomermischung, bestehend aus 17,460 kg Styrol und 7,140 kg Acrylnitril sowie 30 % einer Lösung aus 0,160 kg tert.-Butylperpivalat, 3,600 kg tert-Butanol und 0,400 kg Wasser zugepumpt. Die übrigen 70 % der Lösungen werden innerhalb von 3 h eingepumpt. Währenddessen werden 7,700 kg Wasser in 1 h zugepumpt, wobei gleichzeitig mit der Monomer- und Initiatordosierung begonnen wird. Anschließend wird 1,5 h bis zum völligen Verbrauch des Initiators und einem Feststoffgehalt der Dispersion von 33 % auspolymerisiert. Das Polymerisat wird durch Zugabe von 90°C heißem Wasser ausgefällt. Nach Trocknung werden 24 kg eines weißen, feinpulvrigen Pfropfcopolymerisates erhalten. Seine Grenzviskosität $\eta$ in THF bei 25°C beträgt 1,45 $[dl/g]$. Dieses Pfropfcopolymerisat läßt sich bei 240°C zu einem weißen, glänzenden Strang mit hoher Zähigkeit extrudieren.

Beispiel 4

In einem 40 l-Autoklaven werden 2,000 kg EVA des Beispiels 1 in 8,100 kg tert-Butanol und 1,000 kg Wasser bei 85°C gelöst. Dann wird eine Mischung aus 7,500 kg Styrol, 2,500 kg Acrylnitril, 0,050 kg eines Polyethylenoxids mit einem Molgewicht von 20 000 und 1,000 kg tert-Butanol zugepumpt, und 0,200 kg Propylen als Regler eingedrückt. Anschließend werden 10 % einer Lösung aus 0,040 kg tert-

Le A 19 468

Butylperpivalat, 3,000 kg tert.-Butanol und 0,400 kg Wasser bei 85°C sofort und der Rest in 2 h eingepumpt. Gleichzeitig werden 2,700 kg Wasser in 1,5 h zugepumpt, wobei gleichzeitig mit der Zugabe der Perpivalat-Lösung begonnen wird. Anschließend wird 2,5 h bis zum völligen Verbrauch des Initiators auspolymerisiert. Die entstehende Dispersion hat einen Feststoffgehalt von 42,7 Gew.-%. Nach Aufarbeitung in heißem Wasser und Trocknung bei 60°C werden 11,0 kg eines feinpulvrigen Pfropfcopolymerisates mit einem $\eta_v$-Wert von 1,57 $[dl/g]$ in THF bei 25°C erhalten. Der EVA-Gehalt beträgt 16,2 Gew.-%.

## Beispiel 5 (Vergleichsbeispiel)

Es wird wie in Beispiel 4 verfahren, ohne daß die Pfropfgrundlage durch Zugabe von Wasser ausgefällt wird. Das als Fällungsmittel dienende Wasser wird durch die gleiche Menge tert-Butanol ersetzt. Man erhält eine hochviskose Dispersion, die nur in der Wärme verarbeitbar ist. Der Feststoffgehalt beträgt 34 Gew.-%. Die Aufarbeitung in heißem Wasser führt zu einem grobteiligen Pfropfpolymerisat mit Partikeldurchmessern bis zu 1 cm. Der EVA-Gehalt beträgt 20,3 Gew.-% und der $\eta_v$-Wert 0,75 $[dl/g]$.

Le A 19 468

Patentansprüche

1.  Verfahren zur Herstellung von Pfropfcopolymerisaten durch radikalisch initiierte Fällungscopolymerisation von

    A)  10-80 Gew.-% eines Ethylen-Vinylester-Copolymeren als Pfropfsubstrat und

    B)  90-20 Gew.-% eines aufzupfropfenden Gemisches von

        I)  95-35 Gew.-% eines oder mehrerer Monovinylaromaten,

        II)  5-50 Gew.-% Acrylnitril und/oder Methacrylnitril und

        III)  0-15 Gew.-% eines weiteren monoolefinisch ungesättigten copolymerisierbaren Monomeren,

    wobei die Summe von A und B und I-III jeweils 100 Gew.-% beträgt, dadurch gekennzeichnet, daß gleichzeitig mit dem ausfallenden Pfropfcopolymerisat das nicht gepfropfte Substrat durch Zugabe eines Fällungsmittels ausgefällt wird.

2.  Verfahren nach Anspruch 1, dadurch gekennzeichnet, daß das aufzupfropfende Gemisch B aus

    I)  95,9-58 Gew.-% Styrol,

    II)  5  -30 Gew.-% Acrylnitril und

    III)  0,1-12  Gew.-% eines weiteren monoolefinisch ungesättigten copolymerisierbaren Monomeren besteht,

Le A 19 468

wobei die Summe von I-III 100 Gew.-% beträgt.

3. Verfahren nach Anspruch 1 oder 2, dadurch gekennzeichnet, daß als copolymerisierbare Monomere III Vinylchlorid, $\alpha$-Olefine mit 2-18 C-Atomen, (Meth-)Acrylsäure sowie deren Amide und $C_1$-$C_{12}$-Alkylester, Diallylcarbonat, 1-Buten-3,4-diol, 1,3-Dihydroxi- und 1,3-Diacetoxi-2-methylenpropan eingesetzt werden.

4. Verfahren nach Anspruch 1 bis 3, dadurch gekennzeichnet, daß das nicht gepfropfte Substrat während der Pfropfcopolymerisation durch Zugabe von Wasser, Methanol oder Ethanol ausgefällt wird.

5. Verfahren nach Anspruch 1 bis 3, dadurch gekennzeichnet, daß das Verhältnis von Lösungsmitteln zu Fällungsmittel 5 : 1 bis 1 : 1 beträgt.

0036493
1/1

FIG. 1